# EUROPEAN PATENT APPLICATION

(11) **EP 4 660 158 A1**
(43) Date of publication of application: **10.12.2025**
(21) Application number: 24305880.7
(22) Date of filing: 04.06.2024
(51) Int. Cl.: C03B 9/41, G05B 19/042

(54) **CONTROL DEVICE ADAPTED TO MAINTENANCE OPERATIONS OF A GLASS-FORMING MACHINE**

(71) Applicant: VERALLIA PACKAGING, 92400 Courbevoie (FR)
(72) Inventor: FERNANDEZ SAN JOSE, Javier, Azuqueca (ES)
(74) Representative: Germain Maureau

(57) **Abstract**

The present disclosure relates to a method for controlling a glass forming machine comprising a plurality of glass forming sections, the method comprising: associating an electronic tag to each glass forming section; associating a processing unit, a tag reader, a warning device and a communication circuit to a manual maintenance tool; reading a tag identifier by the tag reader; determining whether the tag identifier corresponds to one of the tags associated to the glass forming sections; and transmitting by the control unit a command to switch an operating state of the glass forming section corresponding to the tag identifier, receiving by the processing unit a message indicating the operating state of the glass forming section corresponding to the tag identifier, and subsequent to receiving the message, activating by the processing unit the warning device to send a warning signal.

## Description

### TECHNICAL FIELD

The present invention relates to the field of glass forming and more particularly to forming glass hollow articles such as containers, bottles, drinking glasses and flasks.

### BACKGROUND

A glass forming machine for forming hollow articles generally comprises a plurality of individual glass forming sections. Such a machine is called an "IS machine" (IS for Individual Section). The glass forming sections may be simultaneously operated and fed from a feeder which discharges individual gobs or charges of molten glass. The gobs of molten glass are distributed by charge distributing means from a feeder outlet to the various sections of the machine. The machine further comprises suitable take-out means for removing the finished ware from a finishing mold of each section and placing it upon a suitable conveyor or other receiving station.

Each glass forming section comprises a blank station for forming a parison from a gob of molten glass using a blank mold, and a blow station for forming a glass container from the parison. Further, each glass forming section comprises a transfer mechanism for transferring the parison from the blank station to the blow station performing a final molding using a finishing mold.

Both the blank and finishing molds are composed of two sheets that open to allow the exit of the preformed and formed glass at specific moments managed by a machine controller.

To peel off completely the glass when opening the molds, and thus avoiding visible defects arising on the surface of the finished products, a release agent has to be applied on the inner surface of the molds. This swabbing operation is generally performed manually or by a swabbing robot, using a brush which is impregnated of the release agent and then rubbed on the inner surfaces of the molds. The release agent is generally a mineral oil containing graphite powder.

When the swabbing operation or swabbing is performed manually by an operator, the operator is submitted to several risks, such as entrapment, burns or blows. To eliminate these risks, the machine controller implements a swabbing cycle which is activated by the operator before starting the swabbing operation, by pressing a specific button on the machine's control panel. This button is generally located on a control panel associated to each of the sections of the IS machine. When a swabbing cycle is activated for a section, the movements of the mechanisms of the corresponding section are stopped, leaving the molds completely open to facilitate the application of swabbing. The status of the section is shown by an indicator light on the control panel of the section. At the end of the swabbing operation of one section, the operator has to press the same button to restart the movements of the section and the delivery of glass to continue forming containers.

The above method for swabbing a section of the IS machine is not satisfactory for the following reasons.

The control panel of each of the sections of the IS machine is generally located above the section, typically at a height of two meters above the ground. Therefore, pressing a button at this height is not ergonomic. In addition, a voluntary movement on the part of the operator is required to visually check the luminous status of the indicator light on the control panel to be sure that the swabbing cycle is activated for this section. Sometimes the bright of the light is not the most appropriate and can lead to a confusion of the operator.

Thus, there is a need for improving ergonomics and security of the swabbing operation.

### SUMMARY

The present disclosure is related to a method for controlling a glass forming machine comprising a plurality of glass forming sections, the method comprising: associating an electronic tag to each glass forming section; associating a processing unit, a tag reader, a warning device and a communication circuit to a manual maintenance tool, the processing unit being connected to the tag reader, the communication circuit and the warning device; reading a tag identifier by the tag reader; receiving, by the processing unit, the read tag identifier from the tag reader; establishing by the processing unit a communication link with a control unit of the glass forming machine, using the communication circuit; determining whether the tag identifier corresponds to one of the tags associated to the glass forming sections; and when the tag identifier corresponds to one of the tags associated to the glass forming sections, transmitting by the control unit a command to switch an operating state of the glass forming section corresponding to the tag identifier, receiving by the processing unit a message indicating the operating state of the glass forming section corresponding to the tag identifier, and subsequent to receiving the message, activating by the processing unit the warning device to send a warning signal.

In this manner, an operator of the glass forming machine can control the operating state of each of the sections of the glass forming machine, by using a manual maintenance tool. Thus, the operator has not to push a button which can be not easily accessible on the glass forming machine. In addition, the operator is warned of an operational state change of the glass forming machine directly by the maintenance tool. Moreover, the use of electronic tags respectively associated with the glass forming sections allows the operator to easily designate the glass forming section to be switched, without any risk of confusion between the sections of the glass forming machine. Therefore, the method improves the ergonomics and safety of the manual maintenance operations such as swabbing operations of the molds in each section of the glass forming machine.

According to an embodiment, the maintenance tool comprises a switch controlled by a button connected to the processing unit, the processing unit activating the tag identifier to control one of the glass forming sections only when the button is pushed by an operator.

The use of such a button prevents an involuntary movement of the operator from triggering a state change in a glass forming section.

According to an embodiment, the warning device comprises at least one of an indicator light and a vibrator, the warning signal being a light produced by the indicator light or a vibration produced in a handle of the maintenance tool by the vibrator.

Thus, the operator can be warned of a change of the operational state of one glass forming sections merely by viewing the maintenance tool or sensing a vibration in his hand holding the handle of the tool. The operator has not to find an indicator light on a control panel of the glass forming machine, that generally comprises many indicator lights.

According to an embodiment, the warning signal differs depending on the switched operating state of the glass forming section corresponding to the tag identifier.

Thus, the operator can determine the switched operating state of the glass forming section, merely by viewing the maintenance tool or sensing a vibration in the handle of the tool.

According to an embodiment, the warning device is set in an intermediate signaling state between a time when the tag reader reads the tag identifier and a time when the warning signal is sent.

Thus, the operator can determine that the operating state of a glass forming section is about to change, merely by viewing the maintenance tool or sensing a vibration in the handle of the tool.

According to an embodiment, the processing unit associated with the maintenance tool reads a table associating the tag identifier of each tag associated with one of the sections of the glass forming machine to a section identifier, to determine a section identifier of the glass forming section corresponding to the read tag identifier, and transmits the section identifier to the control unit of the glass forming machine.

The use of such a table and the electronics tags avoids any confusion about the glass forming section to be controlled.

According to an embodiment, the processing unit associated with the maintenance tool transmits the read tag identifier to an interface circuit connected to the control unit of the glass forming machine, and the interface circuit reads a table associating the tag identifier of each tag associated with one of the sections of the glass forming machine to one of the glass forming sections, to determine to which glass forming section the command to switch an operating state is to be transmitted, and transmits the command to the control unit.

According to an embodiment, a communication range between the tag reader and one of the tags associated with the glass forming sections is shorter than half a width of one of the glass forming sections.

In this manner, it can be assured that the tag reader can read only one tag at the same time. Therefore any confusion about the glass forming section to be controlled is avoided.

According to an embodiment, the tag reader is consistent with a NFC or RFID protocol.

Such protocols involve a very short communication range, which avoids any confusion about the glass forming section to be controlled.

According to an embodiment, the transmissions between the processing unit associated with the maintenance tool and the control unit of the glass forming machine, are performed according to WiFi^{™} or Bluetooth protocols.

Embodiments may also relate to a maintenance tool for a glass forming machine, the maintenance tool comprising a processing unit, a tag reader, a warning device and a communication circuit, the processing unit being connected to the tag reader, the communication circuit and the warning device, the processing unit being configured to: receive a tag identifier from the tag reader; establish a communication link with a control unit of the glass forming machine using the communication circuit; transmit a data linked to the read tag identifier to the control unit; receive a message indicating the operating state of the glass forming section corresponding to the tag identifier, and subsequent to receiving the message, activating the warning device to send a warning signal.

According to an embodiment, the processing unit is further configured to read a table associating the tag identifier of each tag associated with one of the sections of the glass forming machine to a glass forming section identifier, to determine a section identifier of the glass forming section corresponding to the read tag identifier, and to transmit the section identifier to the control unit of the glass forming machine.

According to an embodiment, the warning device comprises at least one of an indicator light and a vibrator, the warning signal being a light produced by the indicator light or a vibration produced in a handle of the maintenance tool by the vibrator.

According to an embodiment, the maintenance tool further comprises a switch controlled by a button and connected to the processing unit, for validating a tag identifier read by the tag reader.

Embodiments may also relate to a system for controlling a glass forming machine comprising a plurality of glass forming sections, the system comprising: a control unit of the glass forming machine, and a maintenance tool comprising a processing unit, a tag reader, a warning device and a communication circuit, the processing unit being connected to the tag reader, the communication circuit and the warning device, the system being configured to implement the method as previously defined.

### BRIEF DESCRIPTION OF THE DRAWINGS

The foregoing and other purposes, features, aspects and advantages of the invention will become apparent from the following detailed description of embodiments, given by way of illustration and not limitation, with reference to the accompanying drawings, in which the same reference refer to similar elements or to elements having similar functions, and in which:
Figure 1 is a schematic front view of a glass-forming machine;
Figure 2 is a schematic side view of a swabbing tool, according to an embodiment;
Figure 3 is a schematic view of components of the swabbing tool and the IS machine, according to an embodiment;
Figure 4 illustrates steps of a method for performing a swabbing in an IS machine, according to an embodiment.

### DETAILED DESCRIPTION

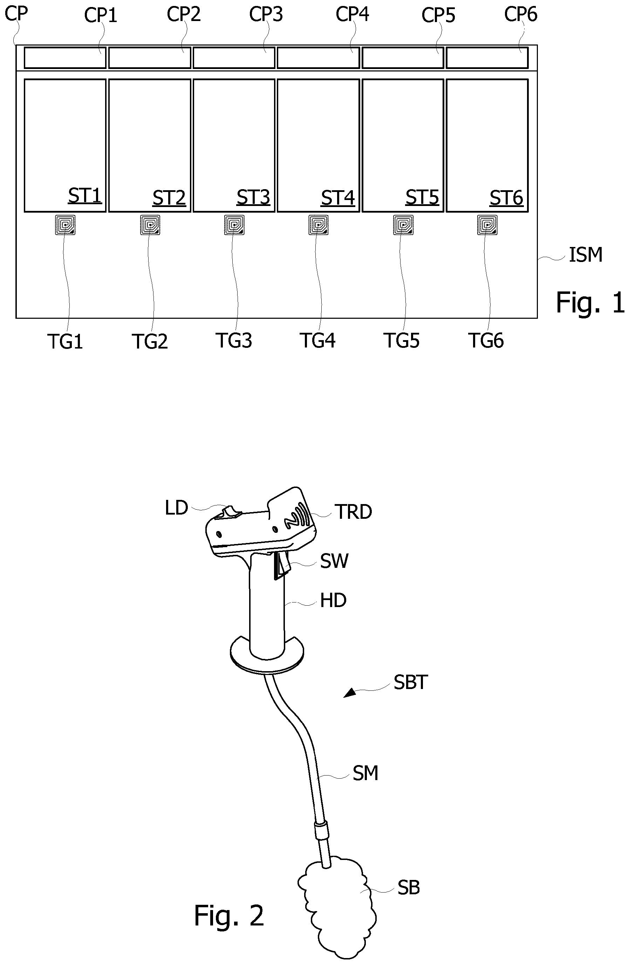

Figure 1 shows a glass forming machine ISM comprising one or more glass forming sections ST1, ST2, ..., ST6 having an opening in a front face 2 of the machine. In the example of Figure 1, the glass forming machine comprises six glass forming sections. However, the glass forming machine can comprise less or more glass forming sections. Each glass forming section STi (i = 1, 2, ..., 6) comprises a blank station for forming a parison from a gob of molten glass, a blow station for forming a glass container from the parison, and transfer mechanisms for feeding the blank station with gobs, transferring the parison from the blank station to the blow station and for transferring finished glass containers from the blow station to a conveyor belt. The machine ISM can further comprise a control panel CP comprising an individual control panel CPi for each section STi. Each control panel CPi comprises control buttons notably a start/stop button to start or stop the operation of the corresponding section STi.

The blank station and blow station of each section STi generally remain accessible to the glass operators for maintenance purpose from the front face of the machine ISM. However in operation, these stations present hazards for the operators such as crushing and burning.

According to an embodiment, a tag TGi is associated to each of the section STi. The tags TGi are disposed in a respective place that is easily accessible to an operator and away from the range of the moving parts of the section. In addition, the place where each tag TGi is fixed clearly indicates to the operator which section STi the tag is associated with.

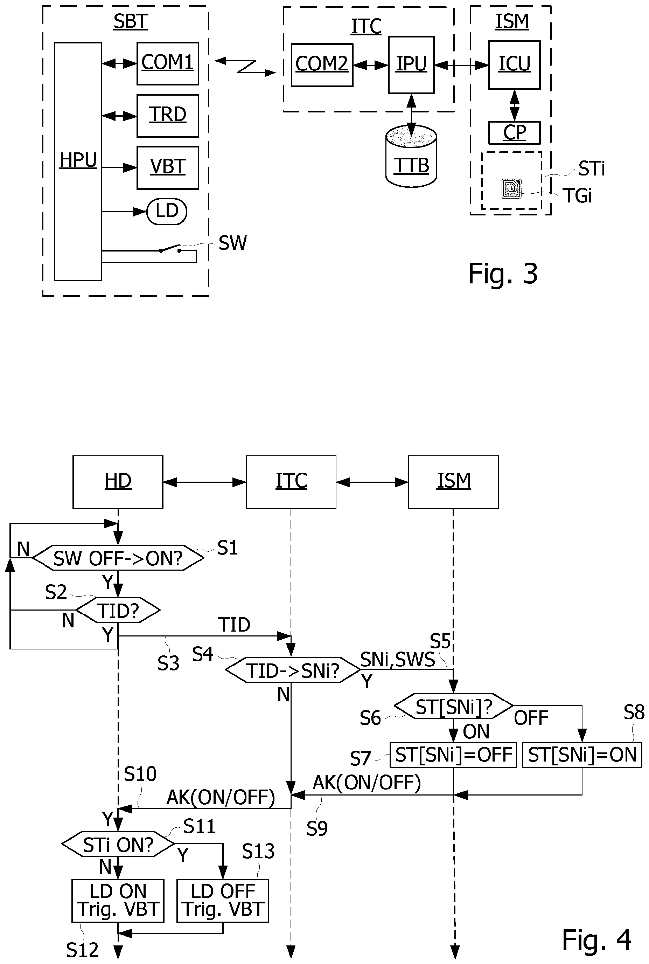

Figure 2 shows a swabbing tool SBT, according to an embodiment. The swabbing tool SBT comprises a handle HD, a swab SB and a stem SM linking the handle HD to the swab SB. Figure 3 shows circuits integrated into the swabbing tool SBT and circuits integrated into the IS machine ISM, according to an embodiment. In figures 2 and 3, the handle HD comprises a button controlling a switch SW, a tag reader TRD and an indicator light LD. In Figure 3, the swabbing tool SBT further comprises a processing unit HPU connected to the switch SW, the tag reader TRD and the indicator light LD. The swabbing tool SBT further comprises a vibrator VBT integrated into the handle HD and controlled by the processing unit HPU, and a communication circuit COM1 connected to the processing unit HPU.

The machine ISM comprises a control unit ICU for controlling the operation of all the sections STi of the machine and a control panel CP comprising a manual swab pushbutton and a manual swab light for each glass-forming section STi, the control panel CP being controlled by the control unit ICU. An interface circuit ITC is connected to the control unit ICU. The interface circuit ITC comprises a processing unit IPU connected to a communication circuit COM2. The interface circuit ITC can be omitted if the IS machine already comprises a communication circuit such as COM2.

The tag reader TRD and the tags TGi can implement the RFID ("Radio Frequency Identification") or NFC ("Near-field communication") protocol. The communication circuits COM1, COM2 can implement a communication protocol such as WiFi^{™} or Bluetooth. The tags TGi can be RFID tags or NFC tags.

Figure 4 shows steps S1-S14 of a method for performing a swabbing operation in the machine ISM, according to an embodiment. In step S1, the processing unit HPU in the handle HD waits for a change of state of the switch SW. If the switch SW is not changed or turned off, step S1 is performed again. At step S2, when the switch SW is turned on, the processing unit HPU activates the tag reader TRD which is waiting for a communication with a tag. If the tag reader TRD communicates with a tag and receives a tag identifier TID, it transmits it to the processing unit HPU. Otherwise, step S1 is performed again to wait for the switch to be turned on. If the processing unit HPU receives a tag identifier TID, this means that a tag is present in the vicinity (e.g. less than 10 cm or less than 1 cm) of the handle HD. The transmission range between the handle HD and the tags TGi associated with the sections STi is shorter than half the distance between two tags TGi, such that only one tag can communicate with the handle at a given moment. Then, the processing unit HPU transmits at step S3 the tag identifier TID to the interface circuit ITC, and returns to step S1.

In step S4, the processing unit IPU of the interface circuit ITC checks whether the transmitted tag identifier TID corresponds to an identifier TIDi of one of the tags TGi associated with one of the sections STi. To perform this operation, the processing unit IPU can have access to a table TTB storing the identifiers of the tags TGi associated with a section STi of the machine IS. The table TTB associates each tag identifier TIDi with an identifier (e.g. a number) SNi of one of the sections STi. If the transmitted tag identifier TID corresponds to an identifier TIDi of one of the tags TGi associated with one of the sections STi, step S5 is performed.

In the following steps, a manual swab switch (in the control panel CP) of the glass forming section STi is set to the state SWS of the switch SW to stop or restart the glass forming section STi. In step S5, the identifier SNi of the glass forming section STi to control is sent to the control unit ICU of the machine ICM. In step S6, the control unit ICU checks the operating status of the section STi corresponding to the transmitted tag identifier TID. If the operating status of the section STi is active, the control unit ICU performs step S7 where it turns off the section STi. Otherwise, this means that the section STi is already stopped and need to be restarted, which is performed at step S8. Steps S7 and S8 may be triggered at the expiration of a timer.

At step S9 which is performed after the end of step S7 or S8, the control unit ICU sends a message AK to the processing unit IPU of the interface circuit ITC indicating the operating status ON/OFF of the section STi. In step S10, the processing unit IPU sends the message AK to the processing unit HPU of the handle HD to indicate whether the transmitted tag identifier TID has been recognized and if so, the operating status (stopped or restarted) of the corresponding section STi.

At step S11, the processing unit HPU receives the message AK and checks the content of the message AK. If the message AK indicates that the operating status of the section STi is ON, the processing unit HPU performs step S13, otherwise it performs step S12. At step S12, a swabbing operation is to be started (the corresponding section STi is stopped or about to be stopped). Then the processing unit HPU turns the indicator light LD on, and triggers the vibrator VBT, to signal the operator that he can proceed with the swabbing operation of the section STi.

At step S13, a swabbing operation is ended (the corresponding section STi is about to be restarted). Then the processing unit HPU turns the indicator light LD off, and triggers the vibrator VBT, to signal the operator that the section STi is now in operation. In step S13, the indicator light LD can be also controlled to blink during a moment before being turned off. After steps S12 and S13, the processing unit HPU can return to step S1.

The vibrations transmitted by the vibrator VBT at steps S12 and S13 to the hand of the operator handing the swabbing tool SBT can be different such that the operator can sense whether the corresponding section is started or stopped, especially to warn the operator that the section STi is about to restart or to inform the operator that the section STi is safe to swab. In addition, the transitions of the indicator light LD to the on and off states can comprise a time during which the indicator light LD is set in an intermediate signaling state, such as blinking. For example, the indicator light LD can be set in the intermediate signaling state after step S1 to indicate to the operator that his activation of the switch is detected, until step S12 or S13 is executed.

The combination of the switch SW and the tag reader TRD is provided to avoid that involuntary actions of the swabbing tool SBT by the operator trigger a start or stop of a section STi.

According to another embodiment, steps S7 and S8 are performed after steps S12 and S13, respectively, the processing unit HPU transmitting to the interface circuit ITC a message indicating that the indicator light LD and the vibrator VBT are set according to the state (ended or to be started) of the swabbing operation.

According to another embodiment, the processing unit HPU has access to the table TTB, and thus can perform step S4 to determine whether the tag identifier TID provided by the tag reader TRD corresponds to one of the tags TGi associated with the sections STi. After step S4, the section number SNi corresponding to the read tag identifier TID can be transmitted to the control unit ICU which then can perform steps S6, and S7 or S8. In addition, the messages transmitted by the processing unit HPU can be command messages for switching (starting or stopping) a section STi of the machine.

The above description of various embodiments is provided for purpose of description to one of ordinary skills in the related art. It is not intended to be exhaustive or to limit the scope of the present disclosure solely to the disclosed embodiments. Numerous alternatives or variations to the present disclosure will be apparent to those of ordinary skills in the related art. Accordingly, while some alternatives or embodiments have been presented specifically, other embodiments will be apparent or easily developed by those of ordinary skills in the related art. Limitations in the appended claims should be interpreted broadly based on the language used in the claims and such limitations should not be restricted to the specific examples described above.

In this respect, it is apparent to those of ordinary skills in the related art that the present invention may be applied to other maintenance tools than a swabbing tool.

In addition, the switch SW can be not necessary, the control of the glass-forming section for realizing a swabbing operation or ending such an operation being triggered by the tag reader TRD upon receiving a tag identifier TID. In fact, the switch SW adds a security as preventing involuntary movements from triggering a state change in the IS machine ISM. Thus, step S1 can be omitted.

In addition, the table TTB can be stored in a memory integrated in the maintenance tool SBT and connected to the processing unit HPU. In this case, the interface circuit ITC merely provides a wireless communication link enabling the maintenance tool to communicate with the control unit ICU of the glass-forming machine.

Moreover, the swabbing tool can comprise other warning devices than an indicator light (LD) and a vibrator (VBT), or can comprise only the indicator light or only the vibrator.

## Claims

1. A method for controlling a glass forming machine (ISM) comprising a plurality of glass forming sections (STi), the method comprising:
associating an electronic tag (TGi) to each glass forming section;
associating a processing unit (HPU), a tag reader (TRD), a warning device (LD, VBT) and a communication circuit (COM1) to a manual maintenance tool (SBT), the processing unit being connected to the tag reader, the communication circuit and the warning device;
reading a tag identifier (TID) by the tag reader;
receiving, by the processing unit, the read tag identifier from the tag reader;
establishing by the processing unit a communication link with a control unit (ICU) of the glass forming machine, using the communication circuit;
determining whether the tag identifier corresponds to one of the tags associated to the glass forming sections; and
when the tag identifier corresponds to one of the tags associated to the glass forming sections, transmitting by the control unit a command to switch an operating state of the glass forming section corresponding to the tag identifier, receiving by the processing unit a message (AK) indicating the operating state of the glass forming section corresponding to the tag identifier, and subsequent to receiving the message, activating by the processing unit the warning device to send a warning signal.

2. The method of claim 1, wherein the maintenance tool (SBT) comprises a switch (SW) controlled by a button connected to the processing unit (HPU), the processing unit activating the tag identifier to control one of the glass forming sections (STi) only when the button is pushed by an operator.

3. The method according to one of claims 1 and 2, wherein the warning device comprises at least one of an indicator light (LD) and a vibrator (VBT), the warning signal being a light produced by the indicator light or a vibration produced in a handle of the maintenance tool by the vibrator.

4. The method according to claim 3, wherein the warning signal differs depending on the switched operating state of the glass forming section (STi) corresponding to the tag identifier (TGi).

5. The method according to one of claims 1 to 4, wherein the warning device is set in an intermediate signaling state between a time when the tag reader (TRD) reads the tag identifier (TID) and a time when the warning signal is sent.

6. The method according to one of claims 1 to 5, wherein the processing unit (HPU) associated with the maintenance tool (SBT) reads a table (TTB) associating the tag identifier (TID) of each tag (TGi) associated with one of the sections (STi) of the glass forming machine (ISM) to a section identifier (SNi), to determine a section identifier of the glass forming section corresponding to the read tag identifier, and transmits the section identifier to the control unit (ICU) of the glass forming machine.

7. The method according to one of claims 1 to 5, wherein the processing unit (HPU) associated with the maintenance tool (SBT) transmits the read tag identifier (TID) to an interface circuit (ITC) connected to the control unit (ICU) of the glass forming machine (ISM), and the interface circuit reads a table (TTB) associating the tag identifier of each tag (TGi) associated with one of the sections (STi) of the glass forming machine to one of the glass forming sections, to determine to which glass forming section the command to switch an operating state is to be transmitted, and transmits the command to the control unit.

8. The method according to one of claims 1 to 7, wherein a communication range between the tag reader (TRD) and one of the tags (TGi) associated with the glass forming sections (STi) is shorter than half a width of one of the glass forming sections.

9. The method according to one of claims 1 to 8, wherein the tag reader (TRD) is consistent with a NFC or RFID protocol.

10. The method according to one of claims 1 to 9, wherein the transmissions between the processing unit (HPU) associated with the maintenance tool (SBT) and the control unit (ICU) of the glass forming machine (ISM), are performed according to WiFi^{™} or Bluetooth protocols.

11. A maintenance tool (SBT) for a glass forming machine (ISM), the maintenance tool comprising a processing unit (HPU), a tag reader (TRD), a warning device (LD, VBT) and a communication circuit (COM1), the processing unit being connected to the tag reader, the communication circuit and the warning device, the processing unit being configured to:
receive a tag identifier (TID) from the tag reader;
establish a communication link with a control unit (ICU) of the glass forming machine using the communication circuit;
transmit a data (TID, SNi) linked to the read tag identifier (TID) to the control unit;
receive a message (AK) indicating the operating state of the glass forming section (STi) corresponding to the tag identifier, and subsequent to receiving the message, activating the warning device to send a warning signal.

12. The maintenance tool of claim 11, wherein the processing unit (HPU) is further configured to read a table (TTB) associating the tag identifier of each tag (TGi) associated with one of the sections (STi) of the glass forming machine (ISM) to a glass forming section identifier (SNi), to determine a section identifier of the glass forming section corresponding to the read tag identifier, and to transmit the section identifier to the control unit of the glass forming machine.

13. The maintenance tool according to claim 11 or 12, wherein the warning device comprises at least one of an indicator light (LD) and a vibrator (VBT), the warning signal being a light produced by the indicator light or a vibration produced in a handle of the maintenance tool by the vibrator.

14. The maintenance tool according to claim 11 or 13, further comprising a switch (SW) controlled by a button and connected to the processing unit (HPU), for validating a tag identifier (TID) read by the tag reader (TRD).

15. A system for controlling a glass forming machine (ISM) comprising a plurality of glass forming sections (STi), the system comprising:
a control unit (ICU) of the glass forming machine, and
a maintenance tool (SBT) comprising a processing unit (HPU), a tag reader (TRD), a warning device (LD, VBT) and a communication circuit (COM1), the processing unit being connected to the tag reader, the communication circuit and the warning device,
the system being configured to implement the method of one of claims 1 to 10.
